# DEMANDE DE BREVET EUROPEEN

(11) **EP 3 792 108 A1**
(43) Date de publication de la demande: **17.03.2021**
(21) Numéro de dépôt: 20195650.5
(22) Date de dépôt: 11.09.2020
(51) Int. Cl.: B60N 2/818, B60N 2/888, B60N 2/897

(54) **SYSTÈME D APPUI-TÊTE DE SIÈGE DE VÉHICULE AUTOMOBILE**

(30) Priorité: 12.09.2019 FR 1910098
(71) Demandeur: TESCA France, 75008 Paris (FR)
(72) Inventeur: SOY, Albert, 17170 Amer (ES)
(74) Mandataire: Sayettat, Julien Christian

(57) **Abrégé**

L'invention concerne un système (1) d'appui-tête de siège de véhicule automobile, ledit système comprenant un premier manchon (9) pourvu d'une rondelle (11) à base de métal à ressort recevant en coulissement la première tige (3) pourvue d'un cran d'anti-extraction (6), ladite rondelle présente une pluralité de créneaux (12) présentant en l'absence de contrainte une position nominale inclinée vers le bas, les bords internes (14) desdits créneaux en position nominale s'inscrivent sensiblement dans un cercle de diamètre inférieur à celui de ladite première tige, de sorte que : en situation de coulissement, lesdits créneaux soient déplacés en position d'inclinaison accentuée vers le bas, lesdits bords prenant appui en contact serrant contre ladite première tige ; lors de la mise en regard de ladite rondelle avec ledit cran, lesdits créneaux s'introduisent dans ledit cran en revenant à leur position nominale pour assurer un blocage en coulissement de ladite première tige vers le haut.

## Description

Il est connu de réaliser un système d'appui-tête de siège de véhicule automobile, ledit système comprenant :
- un appui-tête pourvu d'une armature, ladite armature comprenant une première et une deuxième tige métalliques parallèles, la partie supérieure de ladite armature étant recouverte d'un coussin, au moins ladite première tige étant pourvue d'un cran d'anti-extraction, ledit cran présentant une face inférieure de blocage de ladite première tige en coulissement vers le haut,
- un premier et un deuxième manchon de réception en coulissement respectif desdites première et deuxième tige, lesdits manchons étant destinés à être montés de manière fixe en haut de dossier dudit siège.

Le rôle du cran d'anti-extraction est d'empêcher l'appui-tête d'être projeté dans l'habitacle du véhicule en cas d'accident, une telle situation pouvant être néfaste pour la sécurité des passagers.

Le cran d'anti-extraction est destiné à coopérer, par sa face de crantage inférieure, avec un élément de blocage solidaire du premier manchon pour remplir sa fonction d'anti-extraction.

Cependant, en cas de choc violent de la tête du passager contre l'appui-tête, notamment lorsque l'impact de la tête est décentré par rapport à la zone médiane dudit appui-tête, il peut se produire une extraction de l'élément de blocage hors du cran, suite à une rotation axiale, dans un sens ou dans l'autre, de la première tige, par « effet de manivelle ».

Dans le cas d'une telle rotation, le cran d'anti-extraction se trouve alors décalé angulairement par rapport à l'élément de blocage qui n'assure plus son rôle de blocage de la première tige en coulissement vers le haut, ce qui entraîne un risque d'éjection de l'appui-tête dans le véhicule.

L'invention a pour but de pallier cet inconvénient.

A cet effet, l'invention propose un système d'appui-tête de siège de véhicule automobile, ledit système comprenant :
- un appui-tête pourvu d'une armature, ladite armature comprenant une première et une deuxième tige métalliques parallèles, la partie supérieure de ladite armature étant recouverte d'un coussin, au moins ladite première tige étant pourvue d'un cran d'anti-extraction, ledit cran présentant une face inférieure de blocage de ladite première tige en coulissement vers le haut,
- un premier et un deuxième manchon de réception en coulissement respectif desdites première et deuxième tige, lesdits manchons étant destinés à être montés de manière fixe en haut de dossier dudit siège,
ledit système présentant en outre les caractéristiques suivantes :
- ledit cran est sous forme de tranchée périphérique circulaire,
- ledit premier manchon est pourvu d'une rondelle à base de métal à ressort recevant en coulissement ladite première tige,
- ladite rondelle présente une pluralité de créneaux se répartissant circulairement et saillant radialement vers l'intérieur,
- une pliure est réalisée entre la base desdits créneaux et le reste de ladite rondelle de sorte que lesdits créneaux présentent en l'absence de contrainte une position nominale inclinée vers le bas, leur inclinaison étant élastiquement modifiable sous contrainte,
sachant que les bords internes desdits créneaux en position nominale s'inscrivent sensiblement dans un cercle de diamètre inférieur à celui de ladite première tige, de sorte que :
- en situation de coulissement, lesdits créneaux soient déplacés en position d'inclinaison accentuée vers le bas, lesdits bords prenant appui en contact serrant contre ladite première tige,
- lors de la mise en regard de ladite rondelle avec ledit cran, lesdits créneaux s'introduisent dans ledit cran en revenant à leur position nominale, de manière à pouvoir prendre appui contre ladite face inférieure pour assurer un blocage en coulissement de ladite première tige vers le haut.

Dans cette description, les termes de positionnement dans l'espace (inférieur, supérieur, haut, bas, vertical, ...) sont pris en référence à l'appui-tête disposé dans le véhicule en situation d'utilisation.

Quant aux termes « axial » et « radial », ils sont pris en référence à l'axe d'extension de la première tige.

On précise par ailleurs que le terme « bord interne » désigne le bord de créneau opposé à sa base.

Avec l'agencement proposé, en cas de choc violent de la tête du passager contre l'appui-tête, on assure un blocage en coulissement de la première tige vers le haut, et ceci même en cas de rotation de ladite tige, ce qui permet d'éviter un risque d'éjection de l'appui-tête dans le véhicule.

D'autres particularités et avantages de l'invention apparaîtront dans la description qui suit, faite en référence aux figures jointes, dans lesquelles :
[Fig.1] est une représentation schématique en perspective d'un système selon une réalisation,
[Fig.2] est une vue en perspective d'une rondelle selon un mode de réalisation,
[Fig.3] est une vue schématique partielle en coupe verticale du système de la figure 1, le moyen d'actionnement étant activé de manière à permettre une extraction de la première tige du premier manchon,
[Fig.4a],
[Fig.4b],

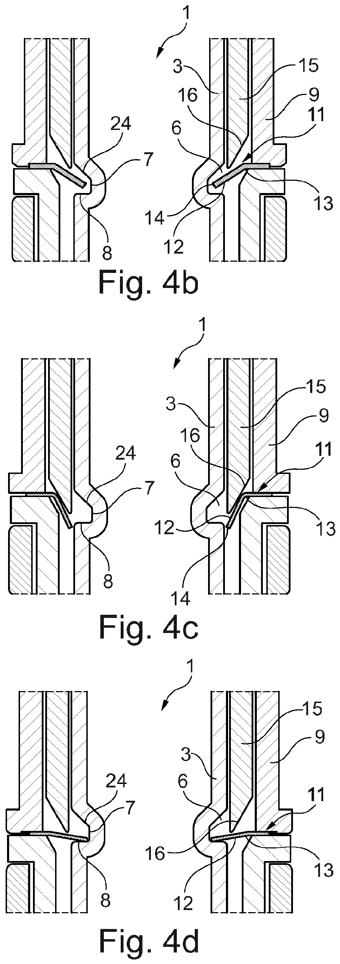

[Fig.4c] et

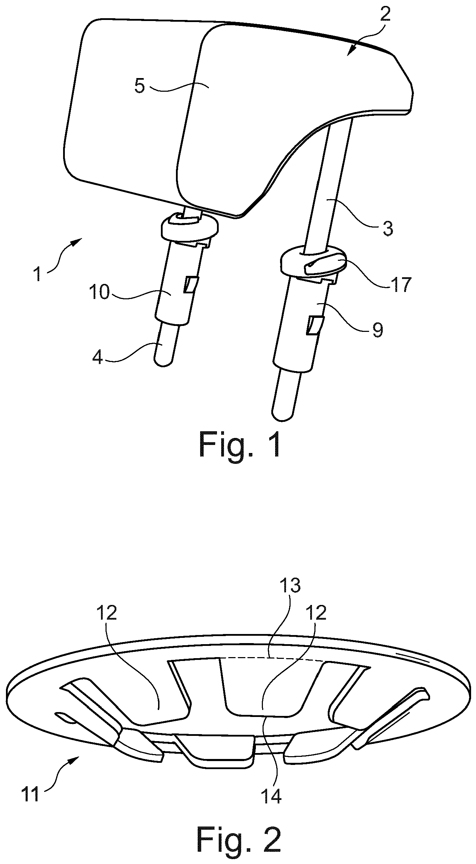

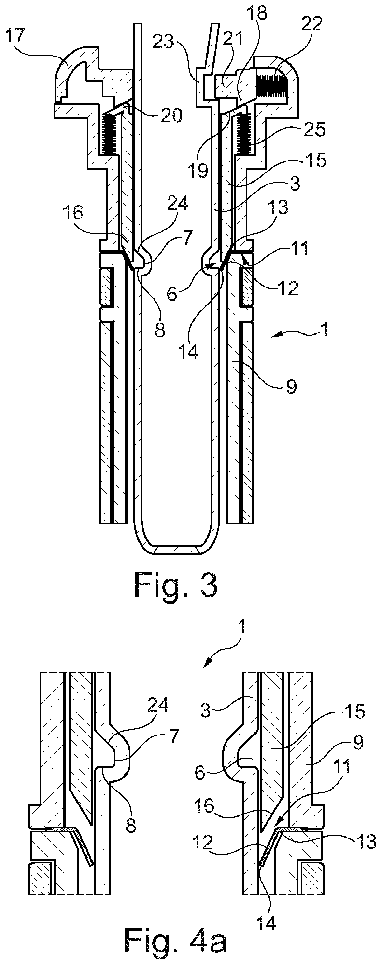

[Fig.4d] sont des vues schématiques de détail en coupe verticale du système de la figure 1, la première tige étant en situation de coulissement (figure 4a), les créneaux étant insérés en position nominale dans le cran d'anti-extraction (figure 4b), le moyen d'actionnement étant activé de manière à permettre une extraction de la première tige du premier manchon (figure 4c), un effort seuil étant appliqué vers le haut sur la première tige pour que les créneaux se déplacent vers une position de moindre inclinaison où leurs bords internes viennent buter contre le fond de cran (figure 4d).

En référence aux figures, on décrit un système 1 d'appui-tête de siège de véhicule automobile, ledit système comprenant :
- un appui-tête 2 pourvu d'une armature, ladite armature comprenant une première 3 et une deuxième 4 tige métalliques parallèles, la partie supérieure de ladite armature étant recouverte d'un coussin 5, au moins ladite première tige étant pourvue d'un cran d'anti-extraction 6, ledit cran présentant une face inférieure 8 de blocage de ladite première tige en coulissement vers le haut,
- un premier 9 et un deuxième 10 manchon - notamment en matériau plastique moulé - de réception en coulissement respectif desdites première et deuxième tige, lesdits manchons étant destinés à être montés de manière fixe en haut de dossier dudit siège,
ledit système présentant en outre les caractéristiques suivantes :
- ledit cran est sous forme de tranchée périphérique circulaire,
- ledit premier manchon est pourvu d'une rondelle 11 à base de métal à ressort recevant en coulissement ladite première tige,
- ladite rondelle présente une pluralité de créneaux 12 se répartissant circulairement et saillant radialement vers l'intérieur,
- une pliure est réalisée entre la base 13 desdits créneaux et le reste de ladite rondelle de sorte que lesdits créneaux présentent en l'absence de contrainte une position nominale inclinée vers le bas, leur inclinaison étant élastiquement modifiable sous contrainte,
sachant que les bords internes 14 desdits créneaux en position nominale s'inscrivent sensiblement dans un cercle de diamètre inférieur à celui de ladite première tige, de sorte que :
- en situation de coulissement, lesdits créneaux soient déplacés en position d'inclinaison accentuée vers le bas, lesdits bords prenant appui en contact serrant contre ladite première tige,
- lors de la mise en regard de ladite rondelle avec ledit cran, lesdits créneaux s'introduisent dans ledit cran en revenant à leur position nominale, de manière à pouvoir prendre appui contre ladite face inférieure pour assurer un blocage en coulissement de ladite première tige vers le haut.

Le coussin 5 peut par exemple être sous la forme d'un bloc de mousse souple surmoulant le haut de l'armature, ledit bloc étant revêtu d'une coiffe de matériau de revêtement.

Selon la réalisation représentée, les bords internes 14 des créneaux 12 s'inscrivent, sous l'effet d'une contrainte ayant pour effet de les amener en position non inclinée, dans un cercle de diamètre inférieur à celui défini par le fond 7 de cran d'anti-extraction 6 de sorte que, en cas d'effort seuil appliqué vers le haut sur la première tige 3 quand lesdits créneaux sont insérés dans ledit cran, lesdits créneaux se déplacent vers une position de moindre inclinaison où lesdits bords viennent buter contre ledit fond de cran de manière à empêcher un passage desdits créneaux à ladite position non inclinée et à renforcer le blocage en coulissement de ladite première tige vers le haut.

Selon la réalisation représentée, le système 1 comprend en outre un moyen d'actionnement 15 des créneaux 12 en position d'inclinaison accentuée vers le bas quand ils sont introduits dans le cran d'anti-extraction 6, de manière à permettre une extraction de la première tige 3 du premier manchon 9 et un démontage de l'appui-tête 2 du dossier de siège.

Selon la réalisation représentée, le moyen d'actionnement 15 est en forme générale de fourreau monté en coulissement axial dans le premier manchon 9, le bord inférieur 16 dudit fourreau prenant appui sur les créneaux 12 pour permettre leur actionnement en position d'inclinaison accentuée.

Selon la réalisation représentée, le moyen d'actionnement 15 est actionné en coulissement par un bouton 17 monté en coulissement radial dans le premier manchon 9, ledit bouton étant pourvu d'au moins une came 18 formée par un premier pan incliné, ladite came coopérant avec un suiveur de came 19 formé par un deuxième pan incliné prévu en bord supérieur 20 dudit moyen, ledit bouton étant en outre solidaire d'un tiroir 21 de verrouillage en hauteur de la première tige 3, ledit tiroir étant actionné par un ressort 22 vers ladite première tige pour pouvoir s'introduire dans une pluralité de crans de verrouillage 23 s'étageant le long de ladite première tige pour définir une pluralité de positions de réglage en hauteur, de sorte que le passage d'une position de réglage à l'autre et l'extraction de ladite première tige dudit premier manchon se fasse par manipulation d'un moyen unique formé par ledit bouton.

Selon la réalisation représentée, la rondelle 11 présente au moins trois - ici huit - créneaux 12.

Selon la réalisation représentée, les créneaux 12 se répartissent selon une symétrie de rotation.

Selon la réalisation représentée, la face inférieure 8 du cran d'anti-extraction 6 s'inscrit dans un plan sensiblement perpendiculaire à l'axe d'extension de la première tige 3.

Selon la réalisation représentée, le cran d'anti-extraction 6 présente en outre une face supérieure 24 inclinée de manière à permettre un dégagement des créneaux 12 dudit cran par application d'un effort vers le bas sur la première tige 3 quand elle n'est pas verrouillée en hauteur.

Selon une réalisation, le bord interne 14 d'un créneau 12 présente une courbure analogue à celle de la première tige 3.

Selon la réalisation représentée, le cran d'anti-extraction 6 est formé par un rétreint circulaire réalisé sur la première tige 3.

Selon une réalisation, la rondelle 11 est revêtue d'un matériau permettant de limiter l'abrasion de la première tige 3 lors de son coulissement dans ladite rondelle, ledit matériau étant par exemple à base de Teflon®.

Selon la réalisation représentée, le système 1 comprend un ressort additionnel 25 d'actionnement du moyen d'actionnement 15 vers sa position inactive.

## Revendications

1. Système (1) d'appui-tête de siège de véhicule automobile, ledit système comprenant :
• un appui-tête (2) pourvu d'une armature, ladite armature comprenant une première (3) et une deuxième (4) tige métalliques parallèles, la partie supérieure de ladite armature étant recouverte d'un coussin (5), au moins ladite première tige étant pourvue d'un cran d'anti-extraction (6), ledit cran présentant une face inférieure (8) de blocage de ladite première tige en coulissement vers le haut,
• un premier (9) et un deuxième (10) manchon de réception en coulissement respectif desdites première et deuxième tige, lesdits manchons étant destinés à être montés de manière fixe en haut de dossier dudit siège,
ledit système étant **caractérisé en ce que** :
• ledit cran est sous forme de tranchée périphérique circulaire,
• ledit premier manchon est pourvu d'une rondelle (11) à base de métal à ressort recevant en coulissement ladite première tige,
• ladite rondelle présente une pluralité de créneaux (12) se répartissant circulairement et saillant radialement vers l'intérieur,
• une pliure est réalisée entre la base (13) desdits créneaux et le reste de ladite rondelle de sorte que lesdits créneaux présentent en l'absence de contrainte une position nominale inclinée vers le bas, leur inclinaison étant élastiquement modifiable sous contrainte,
sachant que les bords internes (14) desdits créneaux en position nominale s'inscrivent sensiblement dans un cercle de diamètre inférieur à celui de ladite première tige, de sorte que :
• en situation de coulissement, lesdits créneaux soient déplacés en position d'inclinaison accentuée vers le bas, lesdits bords prenant appui en contact serrant contre ladite première tige,
• lors de la mise en regard de ladite rondelle avec ledit cran, lesdits créneaux s'introduisent dans ledit cran en revenant à leur position nominale, de manière à pouvoir prendre appui contre ladite face inférieure pour assurer un blocage en coulissement de ladite première tige vers le haut.

2. Système selon la revendication 1, **caractérisé en ce que** les bords internes (14) des créneaux (12) s'inscrivent, sous l'effet d'une contrainte ayant pour effet de les amener en position non inclinée, dans un cercle de diamètre inférieur à celui défini par le fond (7) de cran d'anti-extraction (6) de sorte que, en cas d'effort seuil appliqué vers le haut sur la première tige (3) quand lesdits créneaux sont insérés dans ledit cran, lesdits créneaux se déplacent vers une position de moindre inclinaison où lesdits bords viennent buter contre ledit fond de cran de manière à empêcher un passage desdits créneaux à ladite position non inclinée et à renforcer le blocage en coulissement de ladite première tige vers le haut.

3. Système selon l'une des revendications 1 ou 2, **caractérisé en ce qu'**il comprend en outre un moyen d'actionnement (15) des créneaux (12) en position d'inclinaison accentuée vers le bas quand ils sont introduits dans le cran d'anti-extraction (6), de manière à permettre une extraction de la première tige (3) du premier manchon (9) et un démontage de l'appui-tête (2) du dossier de siège.

4. Système selon la revendication 3, **caractérisé en ce que** le moyen d'actionnement (15) est en forme générale de fourreau monté en coulissement axial dans le premier manchon (9), le bord inférieur (16) dudit fourreau prenant appui sur les créneaux (12) pour permettre leur actionnement en position d'inclinaison accentuée.

5. Système selon la revendication 4, **caractérisé en ce que** le moyen d'actionnement (15) est actionné en coulissement par un bouton (17) monté en coulissement radial dans le premier manchon (9), ledit bouton étant pourvu d'au moins une came (18) formée par un premier pan incliné, ladite came coopérant avec un suiveur de came (19) formé par un deuxième pan incliné prévu en bord supérieur (20) dudit moyen, ledit bouton étant en outre solidaire d'un tiroir (21) de verrouillage en hauteur de la première tige (3), ledit tiroir étant actionné par un ressort (22) vers ladite première tige pour pouvoir s'introduire dans une pluralité de crans de verrouillage (23) s'étageant le long de ladite première tige pour définir une pluralité de positions de réglage en hauteur, de sorte que le passage d'une position de réglage à l'autre et l'extraction de ladite première tige dudit premier manchon se fasse par manipulation d'un moyen unique formé par ledit bouton.

6. Système selon l'une quelconque des revendications 1 à 5, **caractérisé en ce que** la rondelle (11) présente au moins trois créneaux (12).

7. Système selon l'une quelconque des revendications 1 à 6, **caractérisé en ce que** les créneaux (12) se répartissent selon une symétrie de rotation.

8. Système selon l'une quelconque des revendications 1 à 7, **caractérisé en ce que** la face inférieure (8) du cran d'anti-extraction (6) s'inscrit dans un plan sensiblement perpendiculaire à l'axe d'extension de la première tige (3).

9. Système selon l'une quelconque des revendications 1 à 8, **caractérisé en ce que** le cran d'anti-extraction (6) présente en outre une face supérieure (24) inclinée de manière à permettre un dégagement des créneaux (12) dudit cran par application d'un effort vers le bas sur la première tige (3) quand elle n'est pas verrouillée en hauteur.
